**Europäisches Patentamt**

**European Patent Office**

**Office européen des brevets**

(11) Numéro de publication: **0 017 555 B1**

(12) **FASCICULE DE BREVET EUROPEEN**

(45) Date de publication du fascicule du brevet: 23.02.83

(21) Numéro de dépôt: 80400391.1

(22) Date de dépôt: 24.03.80

(51) Int. Cl.³: **C 08 F 2/48, C 08 F 6/00**

(54) Procédé de préparation de polymères ou copolymères acryliques hydrosolubles à poids moléculaire élevé et à faible teneur en monomère(s) résiduel(s).

(30) Priorité: 05.04.79 FR 7908596

(43) Date de publication de la demande:
15.10.80 Bulletin 80/21

(45) Mention de la délivrance du brevet:
23.02.83 Bulletin 83/8

(84) Etats contractants désignés:
AT BE DE FR GB IT LU NL SE

(56) Documents cités:
FR-A-2 064 729
FR-A-2 064 010
FR-A-2 348 227

(73) Titulaire: RHONE-POULENC SPECIALITES CHIMIQUES,
"Les Miroirs" 18, Avenue d'Alsace, F-92400 Courbevoie
(FR)

(72) Inventeur: Neel, Jean, 62, rue Lieutenant Colonel
Prévost, F-69006 Lyon (FR)
Inventeur: Boutin, Jean, 7, rue Buzy, F-69780 Mions (FR)

(74) Mandataire: Tavernier, Colette et al, RHONE POULENC
RECHERCHES Service Brevets Chimie et
Polymères 25, Quai Paul Doumer, F-92408 Courbevoie
Cedex (FR)

Procédé de préparation de polymères ou copolymères acryliques hydrosolubles à poids moléculaire élevé
et à faible teneur en monomère(s) résiduel(s).

La présente invention a pour objet un procédé de préparation de polymères ou copolymères organiques hydrosolubles à haut poids moléculaire utilisables, notamment, comme floculants dans le traitement des eaux; elle concerne plus particulièrement un procédé de préparation de polymères ou copolymères acryliques hydrosolubles à haut poids moléculaire contenant peu ou pas de monomère(s) résiduel(s). L'invention concerne également les produits obtenus selon ce procédé.

On sait que pour des raisons de toxicité, il est très important de pouvoir disposer pour le traitement des eaux de polymères ou copolymères organiques hydrosolubles contenant une très faible quantité de monomère(s) résiduel(s). Diverses règlementations ont fixé la limite supérieure du taux de monomère(s) résiduel(s) (notamment dans le cas des polymères ou copolymères obtenus à partir d'acrylamide) à 0,05% en poids par rapport au produit sec.

On connait bien dans l'art antérieur la préparation de polymères ou copolymères acryliques par photopolymérisation sous un rayonnement ultraviolet. On connait, en particulier, la demande de brevet francais 76.11364 publiée sous le numéro 2348227 qui vise l'obtention de polymères acryliques hydrosolubles à haut poids moléculaire contenant peu ou pas de monomère libre. Selon ce procédé, on dépose en continu et en couche mince sur un support une solution aqueuse de monomère(s) acrylique(s) contenant un promoteur de photopolymérisation à raison de 0,005 à 1% en poids par rapport au(x) monomère(s), ladite solution contenant moins de 1 mg d'oxygène par litre de solution; la couche mince liquide est ensuite soumise à l'action d'un rayonnement de longueurs d'ondes comprises entre 300 nm et 450 nm pendant 1 à 20 minutes, la puissance moyenne du rayonnement actif étant comprise entre 20 et 300 watts/m² l'atmosphère gazeuse recouvrant la couche mince liquide ayant une teneur en oxygène inférieure à 5% en volume, le support étant refroidi pour éliminer les calories; la couche mince ayant ainsi subi un début de polymérisation est maintenue sur le support refroidi et sous atmosphère débarrassée d'oxygène est encore soumise à l'action d'un rayonnement de longueurs d'ondes comprises entre 300 et 450 nm pendant 1 à 20, la puissance moyenne du rayonnement actif étant là comprise entre 300 et 2000 watts/m²; afin de parfaire l'élimination des monomères résiduels présents dans la couche mince non liquide obtenue, celle-ci est dans une autre étape, sous air et sous refroidissement, soumise à l'action d'un rayonnement de longueur d'ondes comprises entre 300 et 450 nm pendant 30 à 3 h, la puissance moyenne du rayonnement actif étant comprise entre 20 et 500 watts/m². Le film obtenu est ensuite haché en fragments, séché puis broyé sous forme de poudre. On obtient par ce procédé des polymères avec des taux de monomère(s) inférieurs à 0,05%. Cependant, il présente un inconvénient: celui de nécessiter une très longue période (30 min à 3 heures) d'Irradiation dans des conditions différentes de l'irradiation précédente. Il en découle que le procédé de l'art antérieur est d'une part, long et d'autre part, onéreux.

On peut déduire de l'art antérieur que cette longue irradiation de 30 min à 3 heures pourrait être remplacée par une extraction des monomères résiduels à l'aide d'un solvant adéquat comme le méthanol plus ou moins dilué. On peut traiter le produit de photopolymérisation par le méthanol qui dissout les monomères résiduels. C'est cependant une méthode longue, coûteuse et difficile à mettre en oeuvre compte tenu du caractère dangereux et toxique du méthanol.

On connait encore par le brevet US 2 960 486 des procédés mettant en oeuvre des sulfites ou métabisulfites alcalins pour diminuer la teneur en monomères dans des polymères hydrosolubles. Ces sulfites ou bisulfites sont introduits après polymérisation dans des mélanges aqueux contenant le polymère, le polymère étant ensuite séché. Si de tels produits sont présents au moment de la polymérisation, ils interfèrent avec le système catalytique et détruisent tout l'équilibre de la formulation. On ne peut donc envisager leur application que sur des produits déjà polymérisés. On sait aussi qu'il est fondamentalement impossible d'obtenir le résultat en faisant agir le sulfite ou le métabisulfite alcalin sur la poudre de floculant telle qu'obtenue après séchage. Dans le cas où après polymérisation on obtient un produit solide caoutchouteux contenant encore une forte proportion de monomère(s) résiduel(s), (0,5% de monomère acrylamide par exemple), il n'existe pas dans l'art antérieur de procédé permettant la réaction entre le sulfite ou le métabisulfite alcalin et le produit de photopolymérisation directe.

On voit donc que subsiste dans l'art antérieur le besoin d'un procédé de préparation de mise en oeuvre simple et rapide permettant l'obtention de polymères ou copolymères acryliques hydrosolubles ayant une très faible teneur en monomère(s) résiduel(s) et ayant, notamment, une très bonne activité floculante.

Les travaux de la demanderesse ont conduit à la mise au point de ce procédé.

La demanderesse a découvert de facon surprenante que si l'on fait agir, de la manière qui sera décrite plus loin, un sulfite ou un métabisulfite alcalin sur la couche mince cautchouteuse obtenue après irradiation, on débarrasse cette dernière des monomères qui y sont contenus et qu'on obtient de ce fait rapidement et simplement un floculant répondant aux normes actuelles de toxicité et ayant une très bonne activité floculante.

L'invention s'applique de la même facon aux procédés de l'art antérieur où la photopolymérisation a lieu en présence de l'oxygène de l'air, comme par exemple le procédé objet de la demande de brevet francais 76.27801 publiée sous le numéro 2 327 258 qui décrit la présence dans la matière à polymériser d'au moins 1 ppm d'un dérivé hydrosoluble de l'anthraquinone non substitué dans les positions 1, 4, 5, 8 et d'au moins 10 ppm d'ions chlorure à l'état dissous.

L'invention a donc pour objet un procédé de préparation de polymères ou copolymères acryliques à hauts poids moléculaires ayant une très faible teneur en monomère(s) résiduel(s), procédé du type selon lequel on dépose sur un support une couche liquide d'une solution aqueuse de monomère(s) acrylique(s) ayant un pH compris entre 4 et 14 et contenant un promoteur de photopolymérisation et on soumet la couche liquide à l'action d'un rayonnement de longueurs d'ondes comprises entre environ 300 nanomètres et environ 450 nanomètres jusqu'à obtention d'une couche caoutchouteuse, caractérisé en ce que l'on enduit au moins une des deux faces de la couche caoutchouteuse obtenue avec au moins un sulfite et/ou au moins un métabisulfite alcalin, l'on réduit en fin morceaux la couche caoutchouteuse enduite, l'on sèche les morceaux et éventuellement on les broie.

La poudre obtenue selon le procédé de l'invention a une teneur en monomère(s) résiduel(s) inférieure à 0,05%.

Selon une forme de réalisation préférée du procédé selon l'invention, on utilise un mélange de sulfite et/ou métabisulfite alcalin sous forme de poudre. Encore plus préférentiellement, cette poudre a une granulométrie inférieure à 0,1 mm.

Selon un mode de réalisation préférentiel, on enduit au moins une des deux faces de la couche caoutchouteuse avec une quantité de sulfite et/ou métabisulfite comprise entre environ 0,1% et environ 3% en poids par rapport à la masse de la couche caoutchouteuse. On préfère utiliser entre 0,3 et 2%. On utilise préférentiellement le sulfite de sodium $Na_2SO_3$ ou le métabisulfite de sodium $Na_2S_2O_5$.

Lorsque le pH de la solution aqueuse de monomère(s) de départ est inférieur à environ 12, on obtient toujours un floculant qui a un très faible taux en monomère(s) résiduels, mais qui en solution dans l'eau, ne donne pas dans tous les cas une solution limpide ou voit son poids moléculaire baisser ce qui affecte son activité floculante. Dans ces cas là, il est avantageux mais non obligatoire d'utiliser pour enduire la couche caoutchouteuse simultanément au sulfite et/ou métabisulfite alcalin au moins un carbonate choisi parmi le groupe comprenant les carbonates alcalins et le carbonate d'ammonium. Ce carbonat ne participe pas à l'élimination des monomères résiduels mais conserve au polymère obtenu son activité floculante optimum. On opère dans ce cas là, de préférence, avec un mélange carbonate alcalin sulfite et/ou métabisulfite alcalin contenant de 0 à 60% en poids environ de carbonate alcalin et de 40 à 100% en poids de sulfite et/ou métabisulfite alcalin. Le carbonate alcalin est selon un mode de mise en oeuvre préféré le carbonate de sodium.

Lorsque le pH de la solution aqueuse de monomère(s) de départ est supérieur à 12, l'adjonction de carbonate alcalin n'est pas nécessaire pour obtenir un polymère ayant une activité floculante optimum.

Le procédé selon l'invention est particulièrement bien adapté pour photopolymériser une solution aqueuse de monomère(s) déposée en couche d'épaisseur de 2 à 20 mm environ et contenant de 0,005 à 1% en poids par rapport au(x) monomère(s) d'un promoteur de photopolymérisation et contenant moins de 1 mg d'oxygène par litre de solution. Cette couche est ensuite soumise pendant 5 à 20 min à l'action d'un rayonnement de longueurs d'ondes précitées dont la puissance moyenne comprise entre 20 et 2000 watts/m² est appliquée de façon croissante, l'atmosphère gazeuse recouvrant la couche liquide ayant une teneur en oxygène inférieure à 5% en volume et le support étant refroidi pour éliminer les calories issues de la polymérisation.

Le procédé selon l'invention permet, par exemple, l'obtention de polymères ou copolymères d'acrylamide, méthacrylamide, acrylonitrile, méthacrylonitrile, acides acryliques et méthacryliques, leurs sels et esters, acrylates et méthacrylates d'aminoalkyle éventuellement quaternisés et leurs mélanges. Elle concerne encore plus particulièrement l'acrylamide puisque ce sont les polyacrylamides qui sont le plus spécialement visés par les règlementations évoquées plus haut.

Selon la nature des monomères, le concentration de la solution aqueuse de départ pourra varier. Ainsi avec l'acrylamide ou ses mélanges avec des acrylates alcalins, cette concentration sera habituellement comprise entre 20 et 60% en poids et de préférence entre 40 et 50%. Si on veut préparer un polymère cationique (polymère dont l'enchainement comporte des sites électropositifs) à base de chlorure de méthacrylate d'aminoalkyle, cette concentration pourra être plus élevée: elle pourra être comprise entre 40 et 90% en poids, de préférence entre 50 et 85%. Si on veut obtenir un copolymère d'acrylamide et de méthacrylate d'aminoalkyle quaternisé la concentration de ces monomères sera de préférence comprise entre 40 et 85%.

La solution de monomère(s) contient nécessairement avant dépôt sur le support, un initiateur de polymérisation de préférence soluble dans le ou l'un des monomères. Les photoinitiateurs pouvant être utilisés dans le procédé selon l'invention sont de type commun. On peut citer notamment la benzoine et ses éthers alkylés comme par exemple, les éthers méthylique, éthylique et propylique.

D'une façon générale, le procédé selon l'invention peut être mis en oeuvre comme suit:

On prépare la solution à polymériser à l'abri de l'air lorsque l'on opère en atmosphère débarrassée d'oxygène et à l'abri de la lumière à partir du moment où on y a incorporé le photoinitiateur. Après avoir éventuellement dégazé la solution à l'azote pour éliminer l'oxygène, on la dépose sur une bande d'acier inoxydable comportant deux bords latéraux. L'atmosphère gazeuse au-dessus de la bande est délimitée par des plaques de verre et a été préalablement débarrassée d'oxygène dans le cas où on opère en l'absence d'oxygène par un courant d'azote. Au-dessus de la bande métallique sur laquelle est déposée la solution sont disposées des lampes (par exemple des lampes à vapeur de mercure basse pression). La partie inférieure de la bande métallique, est, au cours de la polymérisation refroidie par des jets d'eau.

Après 5 à 20 min de polymérisation, on obtient une couche caoutchouteuse qu'on décolle du support d'acier.

L'enduction de la couche coutchouteuse avec le sulfite et/ou métabisulfite alcalin et éventuellement le carbonate peut se faire par tout moyen. On peut prévoir une simple application à l'aide de brosses. Les surfaces de la couche photopolymérisée sont d'elles-mêmes très légèrement collantes et plus ou moins malléables de sorte qu'on arrive par friction et pression à y faire adhérer le mélange pulvérulent.

La couche ainsi enduite est introduite pour le hachage en flocons dans un appareil qui découpe mais aussi mélange intimement les parties externes et les parties internes de la couche et permet une meilleure action du mélange pulvérulent déposé à la surface de la couche caoutchouteuse. On peut opérer dans un hachoir type hachoir à viande composé d'une vis d'archimède métallique tournant dans un cylindre, de sorte que les parties externes du pas de vis soient très proches des surfaces internes du cylindre qui les contiennent sans les toucher. La vis peut ainsi forcer les couches caoutchouteuses contre une plaque perforée d'un grand nombre de trous qui fait ainsi office de filière pour le produit malaxé. Le diamètre de ces trous est de plusieurs millimètres (1–10 mm) et le nombre de trous est tel que la force pressante nécessaire à l'extrusion ne soit pas incompatible avec la puissance appliquée à la mise en mouvement de la vis. L'extrusion est facilitée par des couteaux solidaires de la vis et qui tourne contre la plaque perforée de sorte que l'extrudat est transformé en flocons.

Les flocons plastiques récupérés à la sortie du hacholr contiennent encore 60 à 40% d'eau, un peu de sulfite et/ou métabisulfite et éventuellement d'agent alcalin et de traces de monomère(s) résiduel(s).

L'élévation de température qu'on leur applique lors du séchage subséquent parfait l'action du mélange. Après le broyage final les poudres de polymères ou copolymères obtenues contiennent moins de 0,05% en monomère(s) résiduel(s).

Ce procédé peut être mis en oeuvre de facon continue. La bande d'acier est alors mobile et se déplace sous les lampes de puissance croissante, les opérations subséquentes étant conduites également en continu.

Les exemples suivants illustrent l'invention sans toutefois en limiter la portée.

Exemple 1: on prépare la solution suivante:
Eau: 130 g
Acide acrylique: 35,1 g
NaOH 50%: 39 g
Gluconate de sodium: 1,8 g

On ajoute à cette solution 95 g de poudre d'acrylamide qui se dissout endothermiquement. On ajoute, à l'abri de la lumière 1,25 ml d'une solution à 34 g/l d'éther isopropylique de la benzoine dans l'acide acrylique. On ajuste le pH à 12 avec de la soude à 10%. On dégaze la solution à l'azote pour éliminer l'oxygène. On place la solution sur une plaque d'acier inoxydable bordée de ridelles de 35 cm de long et 18 cm de large de facon à former une couche d'épaisseur uniforme de 4,5 mm environ. L'atmosphère gazeuse au-dessus de la couche liquide délimitée par des plaques de verre a été préalablement à l'introduction du mélange liquide débarrassée de l'oxygène par un courant d'azote. La couche liquide est soumise pendant 15 min au rayonnement de trois lampes ultraviolettes de type actinique (lampes Philips TIADK 30 W 05), la puissance de ces lampes, disposées au-dessus de la plaque de verre horizontale passant progressivement de 330 watts/m² à 1000 watts/m². Après 15 min d'irradiation, on obtient une couche caoutchouteuse de 4,5 à 5 mm d'épaisseur.

Si après hachage et séchage de la couche caoutchouteuse, on analyse la poudre obtenue, on constate qu'elle contient 0,3 à 0,5% d'acrylamide résiduel.

On obtient une teneur de 0,03% d'acrylamide quand on met en oeuvre l'invention: la couche caoutchouteuse après décollement de la plaque est enduite à la brosse sur ses deux faces d'une poudre de sulfite neutre de sodium, de granulométrie moyenne de 0,1 mm. On utilise pour cela 0,5–0,9% en poids de sulfite de sodium par rapport à la couche caoutchouteuse.

On découpe la couche enduite de sulfite en lanières qu'on introduit dans un hachoir. On obtient des flocons que l'on sèche à 75°C pendant 45 min. Les grains obtenus sont broyés jusqu'à obtention d'une poudre de granulométrie inférieure à 1 mm.

Cette poudre titrant 0,034% d'acrylamide est parfaitement blanche. Elle se dissout rapidement pour donner des solutions très visqueuses à 0,5% de concentration dans l'eau pure, la viscosité Brookfield est supérieure à 2500 mPa.s. Dans une eau à 5% de sel marin, la viscosité est supérieure à 250 mPa.s.

Exemple 2: on prépare la solution suivante:
Eau: 157 g
Gluconate de sodium: 1,8 g
Acrylamide: 144 g
Isopropanol: 0,14 ml

On ajoute 1,27 ml d'une solution à 34 g/l d'éther isopropylique de benzoine dans l'acide acrylique. On ajuste le pH à 9,5 en ajoutant une solution de soude à 10%. On opère alors comme dans l'exemple 1, la puissance des lampes passant de 660 watts/m² à 1000 watts/m².

On enduit la couche caoutchouteuse obtenue avec 0,8% en poids par rapport à la couche caoutchouteuse d'un mélange contenant 50% de $Na_2CO_3$ et 50% de sulfite de sodium, la granulométrie de ce mélange étant de 0,1 mm. Après hachage, séchage à 45°C pendant 1 h environ et broyage, on obtient une poudre contenant moins de 0,05% d'acrylamide.

A titre de comparaison, la couche caoutchouteuse non traitée avec le mélange $Na_2CO_3$–$Na_2SO_3$ hachée, séchée et broyée donne une poudre titrant 0,15% d'acrylamide.

La même préparation enduite sans $Na_2CO_3$, c'est-à-dire en enduisant la couche caoutchouteuse avec du $Na_2SO_3$ seul donne une poudre grisatre donnant avec l'eau, des solutions légèrement opalescentes donc contenant des insolubles. De plus, les viscosités sont dans ce cas plus faibles: dans le cas où on utilise le sulfite de sodium seul, on obtient pour une solution à 0,5% en poids de polymère dans de l'eau à 5% en poids de sel marin une viscosité de 100 mPa·s alors qu'on obtient 120 lorsqu'on utilise le mélange $Na_2CO_3$–$Na_2SO_3$.

Exemple 3: on prépare la solution suivante:
Eau: 162 g
Chlorure de méthacrylate d'éthyltriméthylammonium: 16,2 g
Acrylamide: 118,6 g
Gluconate de sodium: 3,2 g
Isopropanol: 0,4 ml

On ajoute à cette solution 1,16 ml d'une solution à 34 g/l d'éther isopropylique de la benzoine dans le méthanol. On ajuste le pH à 8 avec de l'ammoniaque à 10%. On photopolymérise comme dans l'exemple 2. On enduit la couche caoutchouteuse avec 0,7–0,9% d'un mélange, 60% $Na_2CO_3$, on hache et on séche à 75°C pendant 1 heure. Après broyage, on obtient une poudre contenant 0,05% d'acrylamide parfaitement soluble.

A titre de comparaison, en opèrant comme ci-dessus mais sans effectuer le traitement de la couche caoutchouteuse avec le mélange $Na_2CO_3$–$Na_2SO_3$, on obtient une poudre contenant 0,41% d'acrylamide.

D'autre part, si on utilise seulement du sulfite de sodium sans carbonate de sodium, on obtient une poudre se dissolvant plus difficilement et donnant des fractions insolubles.

Si on remplace le $Na_2CO_3$ par du carbonate d'ammonium, on obtient strictement les mêmes résultats.

Exemple 4: on prépare la solution suivante:
Eau: 127,7 g
Chlorure de méthacrylate d'éthyltriméthylammonium. 39,5 g
Acrylamide: 129 g
Gluconate de sodium: 3,9 g

On ajoute 1,9 ml d'une solution à 34 g/l d'éther isopropylique dans un mélange volume à volume méthanol-isopropanol. On ajuste le pH à 7 avec de l'ammoniaque à 10%. On procède à la photopolymérisation comme dans l'exemple 2 et enduit la couche caoutchouteuse avec un mélange 60% $Na_2CO_3$ et 40% $Na_2SO_3$. Après hachage, séchage et broyage, on obtient une poudre blanche donnant facilement une solution limpide contenant 0,05% d'acrylamide.

A titre de comparaison, en opérant comme ci-dessus, mais sans effectuer le traitement de la couche caoutchouteuse à l'aide du mélange $Na_2CO_3$–$Na_2SO_3$, on obtient une poudre contenant 0,15% d'acrylamide.

**Revendications**

1. Procédé de préparation de polymères ou copolymères acryliques à hauts poids moléculaires ayant une très faible teneur en monomère(s) résiduel(s), procédé du type selon lequel on dépose sur un support une couche liquide d'une solution aqueuse de monomère(s) acrylique(s) ayant un pH compris entre 4 et 14
et contenant un promoteur de photopolymérisation et on soumet la couche liquide à l'action d'un rayonnement de longueurs d'ondes comprises entre 300 nanomètres et 450 nanomètres
jusqu'à obtention d'une couche caoutchouteuse, caractérisé en ce que l'on enduit au moins une des deux faces de la couche caoutchouteuse obtenue avec au moins un sulfite et/ou au moins un métabisulfite alcalin, l'on réduit en fins morceaux la couche caoutchouteuse enduite, l'on sèche les morceaux et éventuellement on les broie.

2. Procédé selon la revendication 1 caractérisé en ce que le sulfite et/ou le métabisulfite alcalin est sous forme de poudre.

3. Procédé selon la revendication 2 caractérisé en ce que la poudre de sulfite et/ou de métabisulfite alcalin a une granulométrie inférieure à 0,1 mm.

4. Procédé selon l'une quelconque des revendications précédentes caractérisé en ce qu'on utilise le sulfite et/ou le métabisulfite alcalin en quantité comprise entre 0,1% et 3% en poids par rapport à la masse de la couche caoutchouteuse.

5. Procédé selon la revendication 4 caractérisé en ce que la quantité de sulfite et/ou de métabisulfite alcalin est comprise entre 0,3% et 2%.

6. Procédé selon l'une quelconque des revendications précédentes caractérisé en ce qu'on utilise le sulfite et/ou le métabisulfite de sodium.

7. Procédé selon l'une quelconque des revendications précédentes caractérisé en ce que lorsque la solution aqueuse de monomère(s) acrylique(s) a un pH inférieur ou égal à 12, on utilise simultanément au sulfite et/ou au métabisulfite alcalin au moins un carbonate choisi parmi le groupe comprenant les carbonates alcalins et le carbonate d'ammonium.

8. Procédé selon la revendication 7 caractérisé en ce que le carbonate et le sulfite et/ou le métabisulfite alcalin sont sous forme d'un mélange contenant de 0 à 60% en poids de carbonate et de 40 à 100% en poids de sulfite et/ou de métabisulfite alcalin.

9. Procédé selon l'une quelconque des revendications 7 et 8 caractérisé en ce que le carbonate est le carbonate de sodium.

10. Procédé selon l'une quelconque des revendications 7 et 8 caractérisé en ce que le carbonate est le carbonate d'ammonium.

## Patentansprüche

1. Verfahren zur Herstellung von Acrylpolymerisaten oder -copolymerisaten mit hohem Molekulargewicht, die sehr wenig Restmonomere(s) enthalten, bei dem man auf einen Träger eine flüssige Schicht einer wässrigen Lösung des oder der Acrylmonomeren, die einen pH-Wert von 4 bis 14 aufweist und einen Fotopolymerisationspromotor enthält, aufbringt und der Einwirkung von Strahlen mit Wellenlänge 300 bis 450 nm unterwirft bis zur Bildung einer kautschukartigen Schicht, dadurch gekennzeichnet, dass man mindestens eine der beiden Seiten der erhaltenen kautschukartigen Schicht mit mindestens einem Alkalisulfit und/oder mindestens einem Alkalimetabisulfit beschichtet, die beschichtete kautschukartige Schicht in kleine Stücke zerteilt, die Stücke trocknet und gegebenenfalls vermahlt.

2. Verfahren nach Anspruch 1, dadurch gekennzeichnet, dass das Alkalisulfit und/oder Alkalimetabisulfit als Pulver vorliegt.

3. Verfahren nach Anspruch 2, dadurch gekennzeichnet, dass das Alkalisulfit- und/oder Alkalimetabisulfitpulver eine Korngrösse unter 0,1 mm aufweist.

4. Verfahren nach einem der vorangegangenen Ansprüche, dadurch gekennzeichnet, dass man das Alkalisulfit und/oder Alkalimetabisulfit in einer Menge von 0,1 bis 3 Gew.-%, bezogen auf die Masse der kautschukartigen Schicht, einsetzt.

5. Verfahren nach Anspruch 4, dadurch gekennzeichnet, dass die Menge an Alkalisulfit und/oder Alkalimetabisulfit 0,3 bis 2% ausmacht.

6. Verfahren nach einem der vorangegangenen Ansprüche, dadurch gekennzeichnet, dass man Natriumsulfit und/oder Natriummetabisulfit verwendet.

7. Verfahren nach einem der vorangegangenen Ansprüche, dadurch gekennzeichnet, dass man, wenn die wässrige Lösung des oder der Acrylmonomeren einen pH-Wert $\leq$ 12 aufweist, gleichzeitig mit dem Alkalisulfit und/oder Alkalimetabisulfit mindestens ein Carbonat verwendet, das aus der Gruppe der Alkalicarbonate sowie Ammoniumcarbonat ausgewählt ist.

8. Verfahren nach Anspruch 7, dadurch gekennzeichnet, dass das Carbonat und das Alkalisulfit und/oder Alkalimetabisulfit in Form eines Gemisches, enthaltend 0 bis 60 Gew.-% Carbonat und 40 bis 100 Gew.-% Alkalisulfit und/oder Alkalimetabisulfit, vorliegt.

9. Verfahren nach einem der Ansprüche 7 und 8, dadurch gekennzeichnet, dass das Carbonat Natriumcarbonat ist.

10. Verfahren nach einem der Ansprüche 7 und 8, dadurch gekennzeichnet, dass das Carbonat Ammoniumcarbonat ist.

## Claims

1. Process for the preparation of high molecular weight acrylic polymers or copolymers having a very low content of residual monomer(s), which process is of the type in which a liquid layer of an aqueous solution of acrylic monomer(s), having a pH of between 4 and 14 and containing a photopolymerisation promotor, is deposited on a support, and the liquid layer is subjected to the action of radiation having wavelenghts of between 300 nanometres and 450 nanometres, until a rubbery layer is obtained, characterised in that at least one of the two faces of the rubbery layer obtained is coated with at least one alkali metal sulphite and/or at least one alkali metal metabisulphite, the coated rubbery layer is reduced to small pieces and the pieces are dried and, if appropriate, ground.

2. Process according to Claim 1, characterised in that the alkali metal sulphite and/or metabisulphite is in powder form.

3. Process according to Claim 2, characterised in that the powdered alkali metal sulphite and/or metabisulphite has a particle size of less than 0.1 mm.

4. Process according to any one of the preceding Claims, characterised in that the alkali metal sulphite and/or metabisulphite is used in an amount of between 0.1% and 3% by weight, relative to the mass of the rubbery layer.

5. Process according to Claim 4, characterised in that the amount of alkali metal sulphite and/or metabisulphite ist between 0.3% and 2%.

6. Process according to any one of the preceding claims, characterised in that sodium sulphite and/or metabisulphite is used.

7. Process according to any one of the preceding claims, characterised in that, if the aqueous solution of acrylic monomer(s) has a pH which is less than or equal to 12, at least one carbonate, chosen from amongst the group comprising alkali metal carbonates and ammonium carbonate, is used at the same time as the alkali metal sulphite and/or metabisulfphite.

8. Process according to Claim 7, characterised in that the carbonate and the alkali metal sulphite and/or metabisulphite are in the form of a mixture containing from 0 to 60% by weight of carbonate and from 40 to 100% by weight of alkali metal sulphite and/or metabisulphite.

9. Process according to either one of Claims 7 and 8, characterised in that the carbonate is sodium carbonate.

10. Process according to either one of Claims 7 and 8, characterised in that the carbonate is ammonium carbonate.